# EUROPEAN PATENT APPLICATION

(11) **EP 3 708 961 A1**
(43) Date of publication of application: **16.09.2020**
(21) Application number: 19162605.0
(22) Date of filing: 13.03.2019
(51) Int. Cl.: G01C 21/34

(54) **SYSTEM AND METHOD AND MAP FOR DETERMINING A DRIVING ROUTE OF A VEHICLE**

(71) Applicant: Visteon Global Technologies, Inc., Van Buren Township, MI 48111-5711 (US)
(72) Inventor: TORSCHMIED, Axel, 75334 Straubenhardt (DE); PFEIFLE, Martin, 72297 Seewald (DE)
(74) Representative: MERH-IP Matias Erny Reichl Hoffmann Patentanwälte PartG mbB

(57) **Abstract**

The invention provides a system configured to determine a driving route of a vehicle from a predetermined position to a predetermined destination, comprising map database storage unit 2 configured to store a map database 20 describing a road network of intersecting roads, said database having a structure consisting of a plurality of road section data of a single road or a plurality of interconnected roads, an assigning unit 3 configured to assign attributes relating to an automated driving mode of the vehicle to road section data comprised by the map database storage unit, and an automated driving route determination unit 4 configured to determine an automated driving route of a vehicle from a predetermined position to a predetermined destination based on the attributes assigned to the road section data, in combination with a related method and a related map data base.

## Description

### TECHNICAL FIELD

One or more embodiments described herein relate to a system, a method and a map for determining a driving route, in particular an automated driving route. The system, the method and the map may be used in an automotive vehicle, for example, but are generally applicable to land navigation, marine navigation, aeronautic navigation, and space navigation.

### BACKGROUND

Nowadays, automotive vehicles are quite often equipped with a conventional navigation system for determining a driving route from a position of the vehicle to a desired destination where the driver wishes to travel. The conventional navigation system guides a driver of an automotive vehicle along the driving route. This may include providing turn-by-turn instructions for the driver to follow in order for the driver to keep the automotive vehicle on the driving route.

In general, most conventional navigation systems primarily rely on vehicle position determined electronically by receivers collecting information from satellites and digital map data of the region where a direction or a travelling route shall be determined. Other techniques rely on crossing of lines of position (LOP).

The determination of the driving route performed by such a conventional navigation system of an automotive vehicle may be based on different criteria, such as lengths of the road path, type of street, such as highway or country road, travelling time, traffic jam as announced by broadcasting services, and various others. For this purpose, the conventional navigation system menu usually provides a submenu from which the user may select the type of driving route to be determined, like fastest route, shortest route etc.

Based on the position of the automotive vehicle as determined, for example, by a GPS unit, a driving route to the destination is calculated using map data stored in the conventional navigation system and displayed to the driver. The map data base of a conventional navigation system usually compiles information on the course of roads, available traffic lanes, objects in the surrounding area information regarding speed limits, point-of-interest information (POI), and other information.

Another recent trend in the automotive industry, is development of concepts on "automated" driving.

An automated driving system may generally be realized by combinations of electronic components. In general, an automated driving system may be defined as a system where perception, decision making, and operation of an automotive vehicle are performed by the electronic components, such as sensors and control systems, instead of a human driver. While the automated system has control over the automotive vehicle, it may allow the occupants in the automotive vehicle to leave all responsibilities to the system.

SAE International currently defines six different levels of automation in their new standard of classification in document SAE J3016 that range from 0 (no automation) to 5 (full automation). The six different levels are generally highlighted as follows:

### Level 0 - No automation

The driver is in complete control of the automotive vehicle and the system does not interfere with driving. Systems that may fall into this category are forward collision warning systems and lane departure warning systems, for example.

### Level 1 - Driver assistance

The driver is in control of the automotive vehicle, but the system can modify the speed and steering direction of the vehicle. Systems that may fall into this category are adaptive cruise control and lane keep assist, for example.

### Level 2 - Partial automation

The driver must be able to control the automotive vehicle if corrections are needed, but the driver is no longer in control of the speed and steering of the vehicle, for example, parking assistance is a system that falls into this category, for example.

### Level 3 - Conditional automation

The system is in complete control of vehicle functions of the automotive vehicle such as speed, steering, and monitoring the environment, but the driver must be present to provide any corrections when needed.

### Level 4 - High automation

The system is in complete control of the automotive vehicle and human presence is no longer needed, but its applications are limited to specific conditions.

### Level 5 - Full automation

The system is in complete control of the automotive vehicle and human presence is no longer needed. The system is capable of providing the same aspects of a level 4, but the system can adapt to driving conditions.

An increasing number of automotive vehicles have, in addition to conventional navigation systems, advanced driver-assistance systems, also referred to as ADAS-systems. ADAS-systems are systems developed to automate, adapt and enhance vehicle systems for increased safety and more comfortable driving.

Features of an ADAS system include electronic stability control, antilock brakes, lane departure warning, adaptive cruise control and traction control, for example.

ADAS related technology relies on inputs from multiple data sources, including automotive imaging, LiDAR, radar, image processing, computer vision, and in-car networking. Additional information may be provided from other sources separate from the primary vehicle platform, such as other vehicles, referred to as Vehicle-to-vehicle (V2V) or Vehicle-to-Infrastructure, such as through mobile telephony or other wireless networks, like dedicated short-range communications (DSRC).

### SUMMARY

One or more embodiments describe a system for an automotive vehicle that may be configured to determine a driving route for the automotive vehicle from a predetermined position to a predetermined destination, which at least provides partial navigation of the driving route in an automated driving mode.

The system may comprise a map database storage unit configured to store data of a map database describing a road network of intersecting roads. The database may have a structure consisting of a plurality of road section data of a single road or a plurality of interconnected roads.

The system may have an assigning unit configured to assign attributes relating to the automated driving mode of the automotive vehicle to road section data in the map database storage unit. The assigning unit may be functionally or product-wise integrated into the system or may be configured as a unit separate from the system.

One or more embodiments describe a system, for an automotive vehicle, that may include an automated driving route determination unit. The automated driving route determination unit may be configured to determine an automated driving route for the automotive vehicle from a predetermined position to a predetermined destination. That automated driving route may be based on attributes assigned to road section data.

The automated driving route determination unit and the assigning unit may be integrated together into a navigation system, a driver assist system, or any on-board control device of an automotive vehicle. Alternatively, the automated driving route determination unit and the assigning unit may be separate units, which are associated with data processing devices at different locations, like in a central station, a mobile device or in a data cloud, for example.

One or more embodiments describe a system that integrates aspects of a navigation system into an advanced driver assistance system, thereby significantly improving navigation and guiding options for an automotive vehicle and occupants therein. The system is configured to generate a driving route from the aspects of the navigation system and provide an automated driving mode for traversing at least a portion of the driving route. In the automated driving mode, the system is configured drive the automotive vehicle along the driving route. This may be in either a semi- or fully automated fashion, i.e., Level 2 through Level 5.

The system includes a map database with road section data. The system may be configured to add attributes to the data structure of road section data, which depend on the capability of the respective road section to be used in an automated driving mode of an automotive vehicle. Once assigned, the attributes and the road section data may be stored together in the map database. During compilation of a driving route in a navigation process, the system may use the attributes to select the road sections for the driving route. This may be instead of or in addition to other criteria for compilation of the driving route. Through selecting road sections with the attributes, the driving route may include periods of automated driving, via the automated driving mode associated. If all of the selected road section include attributes, then the entire driving route may be automated, via the automated driving mode. As a result, the system may make automated driving available in the context of navigation, which may be performed in semi- or fully automated driving modes, i.e., Level 2 through Level 5.

In one or more embodiments the road section data to which attributes relating to automated driving are assigned describes a single road, a road lane of a single road, or a plurality of interconnected roads or road lanes. The smallest unit of map may be a section of a road lane, and the largest unit may be a combination of multiple roads, which may include road lanes of these roads. A road section data may be a "link" for navigation purposes.

In one or more embodiments, the assigned attribute is a weighting factor determined based on map data of the map database

Here, the term weighting factor codifies the capability of the respective road section to be used for automated driving. In a simple application scenario, a weighting factor may be a high cost value signifying a low capability of the respective road section to be travelled along in the automated driving mode, while a low cost value signifies a high capability of the respective road section to be travelled along in the automated driving mode.

For example, a weighting factor may be assigned in dependence on one or more characteristics of the group traffic lights, controlled road access, functional road class, tunnels, bridges, section length, landmarks, curves, links comprising a flag indicating that the link is usable for automated driving. Preferably, these characteristics are assigned offline. Specifically, assignment of a weighting factor to the links of a road network may be done offline on a server. In such embodiments the assignment unit is running on a server and stores the weighting factors in the database. This process may be part of the map compilation and may be a simple yet most efficient way to assign weighting factors to road segments.

Additionally or alternatively, the assigned attribute is a weighting factor determined based on the availability of mobile communication connection inside the automotive vehicle and/or GPS. The availability of a mobile connection to other cars or a central traffic station increases the level of information available which may be processed when determining whether or not the respective road section is suitable for being travelled along in an automated driving mode of the automotive vehicle.

Further additionally or alternatively, the assigned attribute may be a weighting factor determined based on sensor data of an automotive vehicle. The data may be transmitted from another vehicle in the same traffic area or may be measured by a sensor of the vehicle.. Non-limiting examples for such a sensor of the vehicle include a video camera, a long distance or a short distance radar unit, a sonar unit, a LiDAR (light detection and ranging) unit, an IMU (inertial measurement) unit suitable.

Further additionally or alternatively, the assigned attribute may be a weighting factor determined based on traffic messages received by the automotive vehicle via mobile communication. This allows, for example, to transmit sensor data in between vehicles travelling in the same area so as to share relevant traffic information, which may not yet be available through broadcasting services, for example.

Generally, each road section data of the database may be associated with a weighting factor indicating suitability for automated driving. A routing algorithm, in the automated driving route determination unit, may compute an optimised driving route of automated driving. An automated driving related attribute may be stored for each road section data in the map database which may be stored on a remote server and may be used inside the car for determining an appropriate driving route in automated mode.

As the attributes are assigned to road sections in the map database, a routing algorithm for calculating an automated driving route, a pure Dijkstra algorithm, an A*algorithm, or any other suitable algorithm may be used also for determining an automated driving route.

One or more embodiments provide an approach to predefine factors for influencing the availability of automated driving. The factors, which may be occupant selected, are criteria to be used when determining an automated driving mode. This provides an opportunity to differentiate between different types of automated driving modes, according to preferences of an occupant. For example, an occupant may prefer to travel in an automated driving mode on road section data where the conditions for automated driving is related to a high degree of safety. As another example, the occupant may prefer to travel in the automated mode on certain classifications of roads. Taking the two examples together, the occupant may prefer traveling in the automated mode on highways, as part of the classification aspect, because of lack of crossings, which may satisfy the high degree of safety aspect through having a single flow of traffic in one direction..

To account for the occupant's preferences, the assigning unit may be configured to attribute a weighting factor or to modify a predefined cost value of one or more characteristics of the following group: traffic lights, controlled road access, functional road class, tunnels, bridges, section length, landmarks, curves, road section data comprising a flag indicating that the road section is usable for automated driving, availability of mobile communication connection, availability of GPS, sensor data of a vehicle, availability of traffic messages, such as through car-to-infrastructure communication.

Due to such an opportunity to differentiate the significance of characteristics/factors in view of automated driving based on different weighting factors, preferences of a driver may be taken into account when deciding on driving routes of an automotive vehicle in an automated driving mode.

For example, in one or more embodiments, the automated driving route determination unit is configured to determine an automated driving route with a minimized total cost value and/or a maximum section length along which automated driving is available.

In one or more embodiments, the system may further comprise a navigation unit that includes a map database storage unit. The system may further include a display unit for displaying a map and a determined automated driving route. The system may further include a driver assist unit for providing traffic, safety information, and assistance to a driver. The driver assist unit may be configured to assign attributes relating to an automated driving mode of the automotive vehicle to road section data.

In one or more embodiments, the system may include an automated driving route determination unit that may be configured to determine an automated driving route. The automated driving determination unit may determine the automated driving route through analysing attributes for automated driving assigned to road section data. The automated driving determination unit may utilize a cost function to minimize total cost value and/or a maximum section length along which automated driving may be available. This may be based on analysing the aforementioned attributes. In one or more embodiments, the automated driving route determination unit may be part of a navigation system for determining a driving route according to other criteria such as travel time, distance, etc.

In one or more embodiments, the navigation unit may be configured to transmit road section data to the driver assist unit at runtime. The driver assist unit may include a unit for assigning attributes relating to an automated driving mode of the automotive vehicle. The unit in the driver assist unit may be configured to determine and transmit an attribute related to automated driving for the received road section data back to the navigation unit.

In one or more embodiments, the navigation unit includes a driving route determination unit configured to determine a driving route of an automotive vehicle from a predetermined position to a predetermined destination based on road section data from a map database. The driving route determination unit may be configured to determine a plurality of alternative driving routes from the predetermined position to the predetermined destination. The navigation unit may be configured to transmit the plurality of alternative driving routes to a driver assist unit.

In one or more embodiments, the driver assist unit may include an automated driving route determination unit. The automated driving route determination unit may be configured to determine total cost value for each of the plurality of alternative driving routes and/or a maximum section length along which automated driving is available. This may be done by analysing attributes for automated driving assigned to road section data for the plurality of alternative driving routes.

In one or more embodiments, a driver assist unit may include an automated driving route determination unit. The automated driving route determination unit may be configured to determine whether automated driving is possible along a road section. If possible, the automated driving unit may set a flag indicating that automated driving is possible along the respective road section. Alternatively, the automated driving route determination unit may be configured to determine and set a threshold cost value for automated driving to a road section.

In one or more embodiments, the driver assist unit is configured to transmit at least one of the alternative routes together with the set flags and/or threshold cost values to a display unit of the navigation unit. The display unit is configured to display the transmitted route(s) and indicate along which section of the transmitted route(s) automated driving is possible, based on the set flags and/or the threshold cost values.

One or more embodiments provide a method for determining a driving route of an automotive vehicle from a predetermined position to a predetermined destination. The method includes assigning attributes relating to an automated driving mode of the automotive vehicle to road section data in a map database, and determining an automated driving route of the automotive vehicle from the predetermined position to the predetermined destination, based on the attributes assigned to the road section data.

One or more embodiments provide a method for determining a driving route of an automotive vehicle from a predetermined position to a predetermined destination. The method includes assigning different attributes to road section data in a map database. The method may further include the steps of outputting an option for selecting at least one of the different attributes and selecting at least one of the output attributes. Based on the selection, the method includes determining an automated driving route for the automotive vehicle from the predetermined position to the predetermined destination.

One or more embodiments provide a map database that includes road network data. As part of the road network data, the map database includes road section data describing the courses of single roads and of interconnected roads. , The map database includes attributes relating to automated driving for the road section data. The attributes are assigned to the road section data of the road network data. By adding different pieces of road section data together, a driving route from a predetermined position to a final destination, which includes sections for automated driving there-between, may be generated.

### BRIEF DESCRIPTION OF THE DRAWINGS

Figure 1 shows a functional structure of one or more embodiments of a system configured to determine a driving route for an automotive vehicle from a predetermined position to a predetermined destination,
Figure 2 shows a functional structure of one or more embodiments of a system, integrated into an automotive vehicle, configured to determine a driving route for the automotive vehicle from a predetermined position to a predetermined destination,
Figure 3 illustrates a display unit of one or more embodiments of a system with a selection unit for selecting criteria for determining a driving route,
Figure 4 illustrates a display unit of one or more embodiments of a system with a selection unit for selecting criteria for determining an automated driving route,
Figure 5 shows a functional structure of one or more embodiments of a system, integrated into an automotive vehicle, configured to determine a driving route for the automotive vehicle from a predetermined position to a predetermined destination, , and
Figure 6 shows steps of a method to determine a driving route for a vehicle from a predetermined position to a predetermined destination.

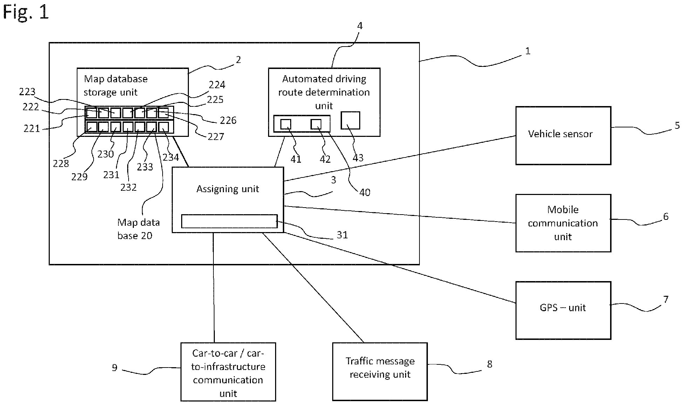

A first embodiment of a system configured to determine a driving route of the vehicle from a predetermined position predetermined destination is schematically shown in figure 1 and comprises a map database storage unit 2 which is configured to store a map database describing a road network.

In the map database, intersecting and interconnecting roads are described as road sections, wherein a road section may be constituted by a lane section or by a road section comprising one or more lanes. A road section may comprise a section of a predetermined single road or may be constituted by intersecting or interconnecting road sections of two or more roads. The map data base may be a real-time, high-definition (HD) map used for automated driving or a map data base with a lower spatial resolution.

The road section data stored in the map database storage unit 2 according to this embodiment may include one or more of the following data: traffic light data 221, controlled road access data 222, functional road class data 223, tunnel data 224, bridge data 225, road section length data 226, landmark data 227, curve data 228, and road section flag data 229 comprising a flag indicating that the road section is usable for automated driving, availability of mobile communication connection data 230 and/or GPS data 231 on the relating road section, sensor data 232 of a vehicle, availability of traffic messages data 233 by the vehicle via mobile communication and/or availability of inter-car-communication services 234 on the respective road section.

The system configured to determine a driving route of a vehicle from a predetermined position to a predetermined destination shown in figure 1 further comprises an assigning unit 3 configured to assign attribute relating to an automated driving mode of the vehicle to road section data comprised by the map database storage unit 2. The assigning unit 3 may comprise a weighting factor assignment unit 31 configured to attribute a weighting factor to road section data stored in the map database storage unit 2. An example for a weighting factor is a cost value. In the present embodiment, the cost value is assigned to road section data relating to one or more of the following types of road section data 221 to 234 mentioned above.

Alternatively, the weighting factors may already be stored in the map database unit. That is, the weighting factors may be determined offline as well on the server and may be stored in the map data base. This variant may increase performance of the relating data processing.

This way of data processing may be combined with embodiments where assignment unit is realized to take dynamic information into account which may influence the ability to drive autonomously.

As an example for assignment, to each of the data 221 to 234, a cost value as an attribute may be assigned to using the weighting factor assignment unit 31, based on the following considerations:
- Controlled access, functional road class (automated driving might be preferred on highways, i.e. cost value low)
- Number of Traffic lights (driver might not want to do automated driving in there are many, i.e. cost value high)
- Connectivity available (driver might want to do automated driving in these cases, i.e. cost value low)
- Traffic signs such as school area => cost value higher
- Tunnel & bridges => cost value higher
- Length of route => the longer the road, the higher the cost value
- GPS availability => the better the GPS-signal quality, the lower the cost value
- Landmark in Database available => the more landmark in the HD database the lower the cost value as positioning gets more accurate
- Curvy road sections => higher cost value
- Explicit Flag "Road section usable for Automated Driving" => lower cost value

The system configured to determine a driving route of a vehicle from a predetermined position predetermined destination 1 shown in figure 1 further comprises an automated driving route determination unit 4 configured to determine an automated driving route of a vehicle from a predetermined position to a predetermined destination based on the weighting factor assigned to the road section data by the weighting factor assignment unit 31 of the assigning unit 3.

The automated driving route determination unit 4 further comprises a selection unit 40 for selecting one specific type of automated driving route including a determination unit 41 for determining automated driving route with a minimized total cost value and an automated driving route determination unit 42 for determining a maximum section length along which automated driving is available according to the attributes assigned to road section data.

The invention is not limited to such a specific configuration of the selection unit 40 and may comprise one or more other automated driving route determination unit for determining an automated driving road in dependence of any of the specific data 221 to 234, as may be desired by user in a given application scenario.

For this purpose the automated driving route determination unit 4 may be designed in such a way that it may be configurable by a user of the system according to the present disclosure for predefining specific type of an optimised automated driving route.

For this purpose a configuration unit 43 for configuring an automated driving route determination may be provided, in addition, which allows the user to set up the automated driving route determination unit 4 for determining a type of an automated driving route according to the specific requirements and demands of the user as defined by use of the configuration unit 43. For example, predefined weighting factors assigned to road section data as stored in the map database storage unit 2 can be modified or even excluded by the user in a configuration process, for example in a configuration user menu, by means of the configuration unit 43 for pre-defining the type of an automated driving route to be used in the navigation process.

Once a certain type of automated driving route has been configured by means of the configuration unit 43, this new type of automated driving route may be made available as a predefined unit by means of the selection unit 40.

As illustrated in figure 1, the system 1 configured to determine a driving route of a vehicle from a predetermined position to a predetermined destination is connected to a vehicle sensor 5 for providing data relating to the status of the vehicle and/or data relating to the surrounding of the vehicle, such as data relating to other traffic participants and their vehicles or characteristics of the driving route such as road condition, presence of obstacles, one type of date of the above specified data to 221 to 234, for example, or any other type of edge flag or landmark information or layered routing network of the map database.

Non limiting examples for such a sensor of the vehicle may be a video camera, a long distance or a short distance radar unit, a sonar unit, a LiDAR (light detection and ranging) unit, an IMU (inertial measurement) unit suitable or any other type of conventionally known sensors for object recognition and tracking.

That is, the system 1 according to one or more embodiments may be configured to determine the attribute to be assigned to the road section data by a sensor 5 of the vehicle in a first step prior to the assignment of attributes to the road section data of the map database.

Furthermore, the system 1 may be connected to one or more of a mobile communication unit 6, GPS unit 7, a traffic message receiving unit 8 and an inter-car communication unit 9 for receiving data utilised in the assignment procedure of assigning attributes to road section data.

Generally, the automated driving route determination unit 4 and the assigning unit 3 may be arranged and integrated in a vehicle's on board system as appropriate. That is, the present disclosure covers any kind of specific configuration and arrangement of an automated driving route determination unit 4 and an assigning unit 3 according to the present disclosure with a navigation system and a driver assist unit, commonly known as ADAS- (advanced driver assist) unit in the art referenced above.

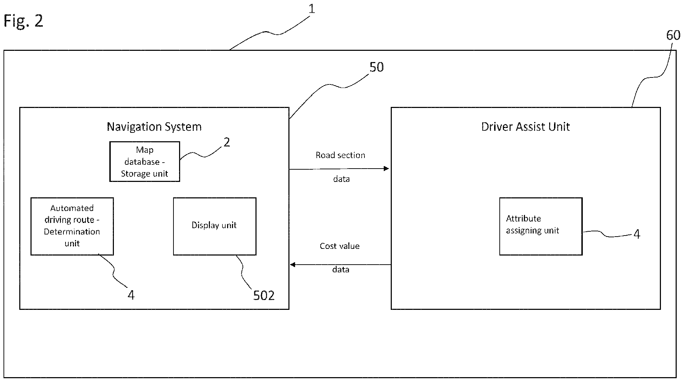

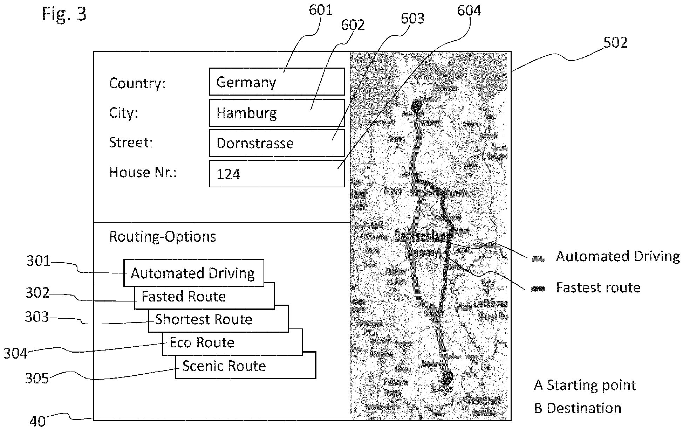

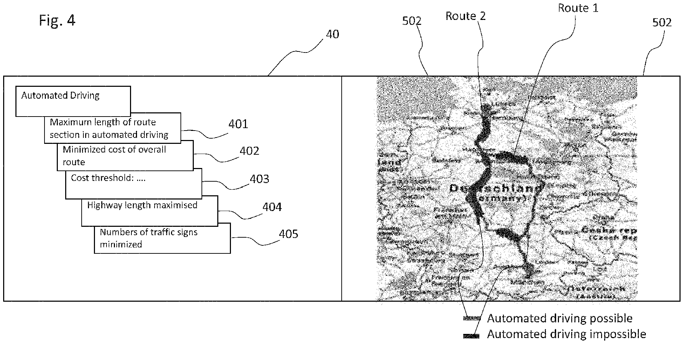

Specifically, figure 2 exemplifies an arrangement where an automated driving route determination unit 4 is integrated into a navigation system 50 together with a map data storage 2. The navigation system 50 may comprise a display unit 502 for displaying one or more determined automated driving route(s) together with map data to the driver. The display unit 502 may be configured to output a routing option to the user which invites the user to select from a menu routing options including automated driving, as explained in more detail with reference to the examples given in figure 3 and 4 in the following:

As shown in figure 3, on a display device 502 may, for example be displayed address fields 601, 602, 603, and 604 for entering a destination address to which an optimised route shall be computed by the navigation system.

The user may select by means of the selection unit 40 from the menu routing options relating to an automated driving route 301, a fastest driving route 302, the shortest driving route 303, an Eco-driving route 304, and a scenic driving route 305 for selecting a type of driving route determination. In response to the user's selection, different driving routes are determined and output on the display 502 by displaying map data showing the driving route from the starting position (Munich) to a final destination (Hamburg, Dornstr. 124) according to the preferred selection criterion entered by the user.

In the example of figure 3, displaying of a fastest route resulting from routing option 302 and an automated driving route resulting from routing option 301 are shown for illustration purposes. The user may then select from the display, which may be configured as a touchscreen, a preferred driving route.

One or more embodiments of the system according to the present disclosure, may similarly to the predefined units 41 and 42 shown in figure 1, comprise a selection unit 40 for selecting a specific type of automated driving from a software menu, which allows the user to select a preferred type of automated driving for determining a particular automated driving route. Such an example is illustrated in figure 4.

As selectable automated driving route options, there are available, for example, a driving route with a maximum section (length) of roads on which automated driving is available 401 and /or a driving route with a minimized total cost value 402 as shown in figure 1. The selection unit 40 allows the user to select from predefined options for determining a specific type of automated driving route offered by a menu of the navigation system or the driver support system, for example.

In addition, as shown in figure 1, there is provided a configuration unit 43 allowing the user to enter a type of data based on which the automated driving route shall be computed for example, from one or more data of data 221 to 234; or for defining a threshold value of cost related to road sections of an automated driving route, which shall not be exceeded by the system when determining automated driving route. Once a new type of automated driving route has been predefined by the user by use of the configuration unit 43, this newly defined type of automated driving route may be made available through the selection unit 40 to be offered as a selectable option from a menu, for example, similarly as shown for the routing options 301 to 305 in figure 3 or 401 to 405 in figure 4.

In the example of figure 4, the presence of traffic signs shall be minimised, if the user selects the type of automated driving offered on the menu by option 405, while the section of highway used by automated driving route is maximised according to the option 404.

When selecting the type of automated driving, the user may enter a threshold value for a cost value for automated driving as an option 403 so that the system will not output automated driving routes exceeding the predefined threshold cost value related to automated driving.

As illustrated in figure 4, when selecting this option 401 to maximise the route section length along which automated driving is possible within a calculated driving route, the system may output, for example, different options for selecting between different driving routes on the display 502 from which the user may understand which one of the selected routes comprises a higher length of automated driving, as illustrated in figure 4. Thereby, the selection of an automated driving route is facilitated by the display 502 displaying the road sections along which automated driving is possible within a calculated driving route.

Returning to figure 2, the system may include a driver assist unit 60 comprising an assigning unit 3 for assigning attributes to road sections for the purpose of determining an optimised autonomous driving route. With such a configuration the driver assist unit 60 may be configured to determine a cost value related attribute and to assign it to a road section provided by the navigation system 50, for example.

For example, the driver assist unit 60 may be configured to provide a cost table to the navigation system 50, for example, for determination of an automated driving route through the automated driving route determination unit in online mode by use of an navigation routing algorithm based on a set of attributes.

Generally, as navigation routing algorithm, for example, a pure the Dijkstra- algorithm or A*- algorithm or any other algorithm exploiting precomputed routing information as known from the art may be utilised by the approach given by the present disclosure.

Alternatively or additionally, the driver assist unit 60 may be configured to compute, for example in an off-line state, cost values per route section in a map compilation process, for example.

In one or more embodiments as, for example, in an embodiment as illustrated in figure 2, the navigation system 50 may be configured to send road section data to the driver assist unit 60 and to receive back a cost value determined by the driver assist unit 60. Based on the received cost values, the automated driving route determination unit 4 of the navigation system 50 may determine a driving route and may display it to the driver on the display unit 502.

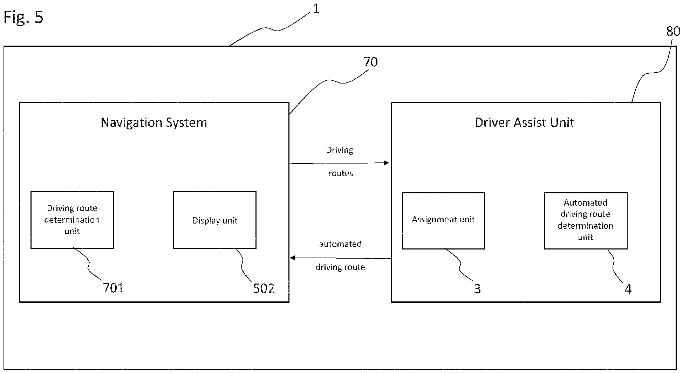

An alternative structure of the system configured to determine a driving route of a vehicle from a predetermined position to a predetermined destination is shown in figure 5. In embodiments realised with such a structure, a navigation system 70 may comprise a display unit 502 and a conventional driving route determination unit 701. A driver assist unit 80 may comprise an assigning unit 3 configured to assign attributes relating to an automated driving mode of the vehicle to road section data and an automated driving route determination unit 4 configured to determine an automated driving route of a vehicle based on the attributes assigned to the road section data.

The driving route determination unit 701 may be configured to determine a driving route of a vehicle from a predetermined position to a predetermined destination and to determine a plurality of alternative driving routes of a vehicle from a predetermined position to a predetermined destination, and to transmit the data relating to the plurality of alternative driving routes to the automated driving route determination unit 4 of the driver assist unit 80 which is configured to determine an optimised automated driving route in dependence on the attributes assigned to road section data of each of the plurality of alternative driving routes. This configuration helps to reduce the amount of communication between the navigation system 70 and the driver assist unit 80, which is particularly of importance in cases where the navigation system 70 and the driver assist unit 80 are not arranged within the same vehicle, but distant from each other in a vehicle and in a remote data processing location related to infrastructure or a cloud, for example.

The automated driving route determined by the automated driving route determination unit 4 of the driver assist unit 80 in figure 5 may then be transferred to the display unit 502 of navigation system 70 to be displayed to the user of the system.

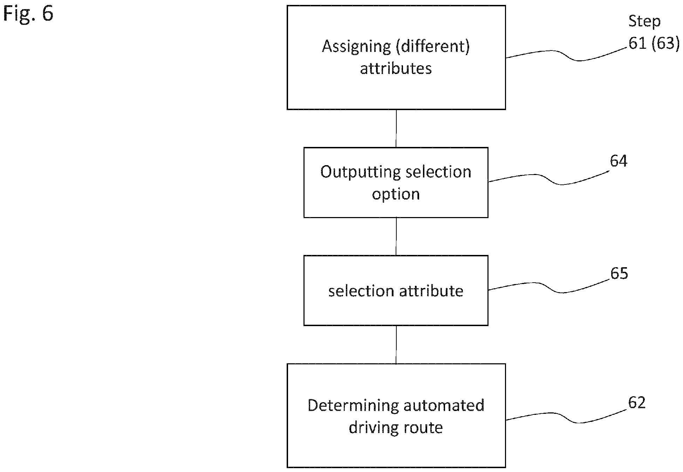

While embodiments of a method for determining a driving route of a vehicle in an automated driving mode from a predetermined position to a predetermined destination have already become apparent from the above description of embodiments with reference to the structure illustrated in figures 1 to 5, a description of the general method steps for determining a driving route of a vehicle in an automated driving mode from a predetermined position to a predetermined destination will be given in the following with reference to figure 6.

One or more embodiments of a method for determining a driving route of a vehicle from a predetermined position to a predetermined destination, comprise step 61 of assigning attributes relating to an automated driving mode of a vehicle to road section data comprised by a map database, and step 62 determining an automated driving route of a vehicle from a predetermined position to a predetermined destination based on the attributes assigned to the road section data.

In one or more embodiments step 61 may be realised as step 63 of assigning different attributes to road section data comprised by the map database. In one or more of such embodiments, an additional step 64 is included of outputting an option for selecting at least one of the different attributes, and a step 65 of selecting at least one of the different attributes and determining an automated driving route of a vehicle from a predetermined position to a predetermined destination based on the selected attributes.

Such a method for determining a driving route of a vehicle in an automated driving mode allows the driver to flexibly modify the criteria for carrying out the determination of a navigation route in an automated driving mode of the vehicle, for example, in dependence on the driving destination in order to increase safety of the driving route.

## Claims

1. System configured to determine a driving route of a vehicle from a predetermined position to a predetermined destination, comprising
- a map database storage unit (2) configured to store a map database (20) describing a road network of intersecting roads, said database having a structure consisting of a plurality of road section data of a single road or interconnected roads, and
- an automated driving route determination unit (4) configured to determine an automated driving route of a vehicle from a predetermined position to a predetermined destination based on attributes relating to an automated driving mode of the vehicle assigned to road section data comprised by the map database storage unit (2).

2. System according to claim 1, wherein the road section data include data of a single road or a road lane of a single road or data of a plurality of interconnected roads or road lanes.

3. System according to claim 1 or 2, further comprising an assigning unit (3) configured to assign the attributes relating to an automated driving mode of the vehicle to the road section data comprised by the map database storage unit (2).

4. System according to claim 3, wherein the assigned attribute is a weighting factor determined based on map data of the map database (20), in particular one or more of the group: traffic light data (221), controlled road access data (222), functional road class data (223), tunnel data (224), bridge data (225), road section length data (226), landmark data (227), curve data (228), and road section data (229) with a flag indicating that the road section is available to automated driving.

5. System according to claim 1, 2, 3 or 4, wherein the assigned attribute is a weighting factor determined based on the availability of mobile communication connection data (230) and/or GPS data (231) on the relating road section, and/or the assigned attribute is a weighting factor determined based on sensor data (232) of a vehicle.

6. System according to one of the preceding claims, wherein the assigned attribute is a weighting factor determined based on availability of traffic message data (233) and/or car-to-car and/or car-to-infrastructure communication service data (234) receivable by the vehicle via mobile communication on the respective road section to which the road section data relates.

7. System according to one of the preceding claims, wherein the automated driving route determination unit (4) comprises an automated driving route determination unit (41) for determining automated driving route with a minimized total cost value and/or automated driving route determination unit (42) for determining a maximum section length along which automated driving is available according to the attributes assigned to road section data, and/or a configuration unit (43) for configuring the automated driving route determination (4).

8. System according to one of the preceding claims, further comprising a navigation unit (50) comprising the map database storage unit (2) and a display unit (502) for displaying a map and a determined automated driving route, and a driver assist unit (60) for providing traffic and/or safety information and assistance to the driver, comprising the unit (3) for assigning attributes relating to an automated driving mode of the vehicle.

9. System according to one of the preceding claims, comprising a navigation system (50) configured to output a routing option to a user having a selection unit (40) to select a type of automated driving route to be determined.

10. System according to claim 8 or 9, wherein the navigation unit is configured to transmit road section data to the driver assist unit 60, preferably at runtime, and the driver assist unit 60 is configured to determine and transmit an attribute for the received road section data back to the navigation unit 50, and the navigation system 50 is configured to determine an automated driving route based on the attributes assigned to the road section data.

11. System according to claim 8, 9 or 10, wherein the navigation unit (70) comprises a driving route determination unit (701) configured to determine a driving route of a vehicle from a predetermined position to a predetermined destination which is configured to determine a plurality of alternative driving routes of a vehicle from a predetermined position to a predetermined destination, and to transmit the data relating to the plurality of alternative driving routes to the automated driving route determination unit (4) which is configured to determine an automated driving route in dependence on the attributes assigned to road section data of each of the plurality of alternative driving routes.

12. System according to claim 11, wherein the automated driving route determination unit (4) is configured to determine and set to each road section comprised by the alternative routes determined by the driving route determination unit of the navigation unit a flag indicating that automated driving is possible and/or a threshold value indicating a minimum cost value for the respective road section to be classified as being available to automated driving, to transmit at least one of the alternative routes together with the set flags and/or threshold values to the display unit (502) of the navigation unit (70) which is configured to display the transmitted route indicating along which section of the transmitted route automated driving is possible based on the set flags and/or the threshold values.

13. Method for determining a driving route of a vehicle from a predetermined position to a predetermined destination, comprising
- assigning attributes relating to an automated driving mode of a vehicle to road section data comprised by a map database (20), and
- determining an automated driving route of a vehicle from a predetermined position to a predetermined destination based on the attributes assigned to the road section data.

14. Method according to claim 13, further comprising the steps of assigning different attributes to road section data comprised by the map database (20), outputting an option for selecting at least one of the different attributes, selecting at least one of the different attributes and determining an automated driving route of a vehicle from a predetermined position to a predetermined destination based on the selected attributes.

15. Map database comprising road network data of intersecting roads, consisting of a plurality of road section data describing the course of a single road or of interconnected roads of a road network, wherein an attribute relating to automated driving is assigned to road section data of the plurality of road section data.
